# EUROPÄISCHE PATENTSCHRIFT

(11) **EP 3 554 829 B1**
(45) Veröffentlichungstag und Bekanntmachung des Hinweises auf die Patenterteilung: **01.04.2026**
(21) Anmeldenummer: 17821468.0
(22) Anmeldetag: 13.12.2017
(51) Int. Cl.: B32B 27/10, B32B 27/32, C08J 7/04, C08J 7/043, C08J 7/046

(54) **LEBENSMITTELVERPACKUNG ENTHALTEND EINE FOLIE MIT BARRIERE-EIGENSCHAFTEN GEGEN MINERALÖLE**
FOOD PACKAGING CONTAINING A FILM WITH BARRIER PROPERTIES WITH REGARD TO MINERAL OILS
EMBALLAGE ALIMENTAIRE COMPRENANT UN FILM AYANT DES PROPRIÉTÉS BARRIÈRES CONTRE LES HUILES MINÉRALES

(30) Priorität: 15.12.2016 DE 102016014893
(43) Veröffentlichungstag der Anmeldung: 23.10.2019
(73) Patentinhaber: Treofan Germany GmbH & Co. KG, 66539 Neunkirchen (DE)
(72) Erfinder: GOTTFREUND, Thomas, 66578 Schiffweiler (DE); HÜTT, Detlef, 66265 Heusweiler (DE)
(74) Vertreter: Wächtershäuser & Hartz Patentanwaltspartnerschaft mbB
(86) Internationale Anmeldenummer: PCT/EP2017/001422
(87) Internationale Veröffentlichungsnummer: WO 2018/108315

(56) Entgegenhaltungen:
- EP-A1- 2 740 685
- EP-A2- 0 255 870
- WO-A1-2014/072066
- WO-A2-2012/163749

## Beschreibung

Die vorliegende Erfindung betrifft eine beschichtete Folie, welche Barriere-Eigenschaften gegenüber Mineralölen aufweist und daraus hergestellte Lebensmittelverpackungen.

Folien auf Basis von Polyolefinen, insbesondere biaxial orientierte Polypropylenfolien (boPP), werden heute als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Die Polypropylenfolien können sowohl als transparente Folien als auch als opake Folien eingesetzt werden.

Für Lebensmittelverpackung werden auch Kartonagen eingesetzt, die aufgrund ihrer Verfügbarkeit häufig als Recyclingkarton vorliegen. Hierbei treten Probleme auf, da Recyclingkartons typischerweise 300-1000 mg/kg Mineralöl mit einer relativ geringen molaren Masse (hauptsächlich n-C18 bis n-C22) und einem Gehalt von aromatischen Anteilen zwischen 15-20 % enthalten (Stellungnahme Nr. 008/2010 des Bundesinstitutes für Risikobewertung "BfR" vom 09.12.2009).

Bei den in den Recyclingkartons nachgewiesenen Mineralölgemischen handelt es sich um paraffinartige (offenkettige, meist verzweigte) und naphthenartige (zyklische) Kohlenwasserstoffe, die als "mineral oil saturated hydrocarbons" (MOSH) bezeichnet werden, sowie um aromatische Kohlenwasserstoffe, "mineral oil aromatic hydrocarbons" (MOAH), die vor allem aus hoch alkylierten Systemen bestehen (vgl. Biedermann M, Fiselier K, Grob K, 2009, "Aromatic hydrocarbons of mineral oil origin in foods: Method for determining the total concentration and first results. Journal of Agricultural and Food Chemistry 57: 8711-8721.

Ohne geeignete Maßnahmen, besteht die Gefahr, dass die vorstehend bezeichneten Mineralölgemische das verpackte Lebensmittel kontaminieren.

Polyolefin-Folien, insbesondere biaxial orientierten Polypropylenfolien (boPP), haben keine geeigneten Barriereeigenschaften gegen diese Mineralölgemische und können alleine die Migration nicht wirksam verhindern.

In der WO 2014/072066 A1 wird eine Lebensmittelverpackung beschrieben, welche eine biaxial orientierte Polypropylenfolie und einen Recyclingkartons umfasst. Die biaxial orientierte Polypropylenfolien (boPP) hat auf mindestens einer Oberfläche der Folie eine Beschichtung aus (i) Acrylat-Polymeren, und/oder (ii) halogenhaltige Vinyl- und/oder Vinylidenpolymere, und/oder (iii) Polymeren basierend auf Vinyl-Alkohol (VOH). Die Beschichtung verbessert zwar grundsätzlich die Mineralölbarriere, ist aber hinsichtlich dieser Sperrwirkung noch weiter verbesserungsbedürftig.

Des Weiteren sind die bekannten Polyacrylat-beschichteten Folien hinsichtlich ihres Verarbeitungsverhaltens schlecht, d.h. die Reibung und die Gleit-Eigenschaften müssen verbessert werden. Dies gilt insbesondere für Ausführungsformen der Lebensmittelverpackung bei der befüllte Beutel- oder Einschlagverpackungen in einer weiteren umhüllenden Kartonverpackung verpackt werden. In diesen Fällen muss die Folie auf den Druckmaschinen und den Packmaschinen ein gutes Laufverhalten aufweisen. Aber auch bei der Kaschierung eines Recyclingkartons mit Folie wird diese Kaschierfolie aufgewickelt, abgewickelt und muß in dem eigentlichen Laminierprozeß problemlos zu verarbeiten sein.

Aufgabe der vorliegenden Erfindung war es, daher eine biaxial orientierte Polypropylenfolie für Lebensmittelverpackungen aus Recyclingkartons bereitzustellen, die eine weiter verbesserte Barriere gegen Mineralölgemische aufweist, so dass eine Kontamination des verpackten Lebensmittels durch das im Recyclingkarton vorhandene Mineralölgemisch vermieden wird. Die Folie muss gleichzeitig gute Verarbeitungseigenschaften aufweisen, d.h. sie muss insbesondere auf Druckmaschinen, Packmaschinen oder in Laminiervorrichtungen verwendbar sein, ohne dass es zu Störungen kommt.

Diese Aufgabe wird gelöst durch eine Lebensmittelverpackung umfassend:
A) ein Lebensmittel,
B) eine beschichtete Folie, welche sich im Kontakt mit dem Lebensmittel befindet,
C) ein Karton auf Basis eines Recyclingkartons, welcher sich im Kontakt mit der beschichteten, biaxial orientierten Polypropylenfolie befindet,

dadurch gekennzeichnet, dass die beschichtete Folie B)
eine biaxial orientierte Polypropylenfolie umfasst, welche auf mindestens einer Oberfläche
mindestens eine erste Primerschicht umfasst, welche sich in Kontakt mit einer Oberfläche der biaxial orientierten Polypropylenfolie befindet, und
eine erste innere Beschichtung umfasst, welche sich in Kontakt mit der ersten Primerschicht befindet und die keine partikelförmigen Zusatzstoffe enthält und die mindestens ein Polymer basierend auf Acrylat enthält, und
eine erste äußere Beschichtung umfasst, welche sich in Kontakt mit der ersten inneren Beschichtung befindet und welche die äußere Oberfläche der beschichteten Folie bildet und die reibungsvermindernde Zusatzstoffe enthält und die mindestens ein Polymer basierend auf Acrylat enthält.

Diese Aufgabe wird des Weiteren gelöst durch eine beschichtete Folie, welche
eine biaxial orientierte Polypropylenfolie umfasst, welche auf mindestens einer Oberfläche
mindestens eine erste Primerschicht umfasst, welche sich in Kontakt mit einer Oberfläche der biaxial orientierten Polypropylenfolie befindet, und eine erste innere Beschichtung umfasst, welche sich in Kontakt mit der ersten Primerschicht befindet und die keine partikelförmigen Zusatzstoffe enthält und die mindestens ein Polymer basierend auf Acrylat enthält, und
eine erste äußere Beschichtung umfasst, welche sich in Kontakt mit der ersten inneren Beschichtung befindet und welche die äußere Oberfläche der beschichteten Folie bildet und die reibungsvermindernde Zusatzstoffe enthält und die mindestens ein Polymer basierend auf Acrylat enthält.

Die erfindungsgemäße Lebensmittelverpackung benötigt keine Metallisierung, d.h. es ist weder eine Metallisierung der Folie noch eine Metallisierung des Kartons notwendig, um die Kontamination des Lebensmittels mit Mineralöl zu minimieren. Die Erfindung kann durch unterschiedlich ausgestaltete Lebensmittelverpackungen realisiert werden. In einer Ausführungsform werden mit an sich bekannten Technologien Beutelverpackungen oder Einschlagverpackungen aus der beschichteten Folie hergestellt, welche das Lebensmittel enthalten. Die gefüllte Beutel- oder Einschlagverpackung wird dann in einer weiteren umhüllenden Kartonverpackung verpackt. Die Beschichtung auf der Außenseite der Beutel- oder Einschlagverpackung verhindert die Migration der Mineralöle aus dem Karton in das Lebensmittel. In einer weiteren Ausführungsform kann der Karton mit der beschichteten Folie laminiert oder kaschiert werden. Aus dem beschichteten Karton wird dann eine Verpackung hergestellt, welche das Lebensmittel enthält. Diese Variante ist vorteilhaft für Verpackungen in denen das Lebensmittel andernfalls in einem direkten Kontakt mit dem Karton stehen würde,z.B. Adventskalender.

Die erfindungsgemäße Verpackung stellt sicher, dass die beschichtete Folie die Migration von Mineralölen, die aus dem Recyclingkarton stammen, in das Lebensmittel minimiert oder verhindert. Daher sollte bei der individuellen Gestaltung der Verpackung kein direkter Kontakt zwischen dem Karton und dem Lebensmittel vorliegen. Das Lebensmittel sollte sich nur in Kontakt mit der beschichteten Folie befinden.

Die Begriffe "Acrylat" bzw. "Acrylate" "Basisfolie", "beschichtete Folie", "Primerschicht", "Beschichtung", "Polyacrylat" bzw. Acrylat-Polymer und "VOH-Polymer" haben im Sinne der vorliegenden Erfindung jeweils die folgende Bedeutung:
"Acrylat" oder "Acrylate" bezeichnet/bezeichnen allgemein die Salze, Ester, Amide, Säurechloride, Säureanyhdride und/oder konjugierten Basen der Acrylsäure (IUPAC: Prop-2-ensäure, Formel: H₂C=CH-COOH) sowie deren (chemische) Derivate.

Die "Basisfolie" ist eine biaxial orientierte Polypropylenfolie, welche noch keine Primerschicht und noch keine Beschichtung aufweist.

"Primerschicht" ist eine Schicht, die auf der oder den äußeren Oberfläche/n der Basisfolie aufgebracht ist/sind und die Haftung der nachfolgenden Beschichtung/en verbessert.

"Beschichtung" ist eine Schicht oder bezeichnet auch mehrere Schichten die mindestens ein Polymer basierend auf Acrylat enthält.

Die "beschichtete Folie" umfasst mindestens die Basisfolie, die Primerschicht/en und die Beschichtung/en.

"Polyacrylat" oder "Acrylatpolymer" ist ein Polymer basierend auf Acrylat-Einheiten, wie beispielsweise Ethylacrylat, Ethylmethacrylat, Methylmethacrylate, Methylacrylate und/oder Polybutylacrylat, die gegebenenfalls auch als Copolymere mit mindestens einem weiteren Co-Monomere polymerisiert vorliegen können.

"VOH-Polymer" ist ein Polymer basierend auf Vinyl-Alkoholen, beispielsweise Ethylenvinyl-Alkohol-Polymere (EVOH) und/oder Polyvinylalkohol (PVOH).

### Basisfolie:

Die Basisfolie der erfindungsgemäßen Lebensmittelverpackung ist eine biaxial orientierte Polypropylenfolie, die ein- oder mehrschichtig aufgebaut ist. Mehrschichtige Ausführungsformen der Basisfolie umfassen eine Basisschicht und mindestens eine, bevorzugt beidseitig Deckschicht/en, welche die äußere/n Schichten der Basisfolie bildet/bilden. Gegebenenfalls ist die Basisfolie vier- oder fünfschichtig aufgebaut und hat zusätzlich eine oder beidseitig Zwischenschicht/en, welche zwischen der Basisschicht und der oder den Deckschicht/en angebracht ist/sind. Die Basisschicht bildet im Allgemeinen die zentrale Schicht der Basisfolie und weist die größte Dicke auf.

Die Dicke der Basisfolie liegt im Allgemeinen in einem Bereich von 15 bis 100µm, vorzugsweise 20 bis 80µm, vorzugsweise 30 bis 60 µm, insbesondere 25 bis 50µm. Für mehrschichtige Ausführungsformen der Basisfolie beträgt die Dicke der Basisschicht zwischen 10 und 60µm, vorzugsweise zwischen 10 und 40µm. Die Dicke der Deckschicht/en beträgt im Allgemeinen jeweils 0,5 bis 3 µm. Die Zwischenschicht/en hat/haben eine Dicke im Bereich von 1 bis 8 µm. Bei einer Kombination aus Zwischenschicht und Deckschicht haben diese zusammen vorzugsweise eine Gesamtdicke von 2 bis 8 µm.

Die einschichtige Basisfolie bzw. die Basisschicht der mehrschichtig aufgebauten Basisfolie enthält im Allgemeinen mindestens 50 Gew.-% Propylenpolymer, bezogen auf das Gesamtgewicht der Basisfolie, sowie gegebenenfalls weitere übliche Additive in jeweils wirksamen Mengen. Im Allgemeinen enthält die Basisschicht, bzw. die Basisfolie mindestens 70 bis <100 Gew.-%, vorzugsweise 75 bis 98 Gew.-%, insbesondere 85 bis 95 Gew.-%, des Propylenpolymer, jeweils bezogen auf das Gewicht der Basisschicht oder auf das Gewicht der Basisfolie.

Geeignete Propylenpolymere enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 1 bis 10 g/10 min, vorzugsweise 2 bis 8 g/10 min, bei 230°C und einem Auflagegewicht von 2,16 kg (DIN EN ISO 1133). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer mit einem Schmelzpunkt von 150 bis 170°C besonders bevorzugt ist. Die angegebenen Gewichtsprozente beziehen sich auf das jeweilige Polymere.

Des Weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung im Allgemeinen mindestens 50 Gew.-%, insbesondere mindestens 70 Gew.-%, Propylenpolymere enthält. Geeignete andere Polyolefine in der Polymermischung sind Polyethylene, insbesondere HDPE, MDPE, LDPE, VLDPE und LLDPE, wobei der Anteil dieser Polyolefine jeweils 15 Gew.-%, bezogen auf die Polymermischung, nicht übersteigt.

In einer mehrschichtigen, opaken Ausführungsform enthält die Basisschicht der Basisfolie vakuoleninitiierende Füllstoffe in einer Menge von maximal 30 Gew.-%, vorzugsweise 5 bis 25 Gew.-%, bezogen auf das Gewicht der opaken Basisschicht, wobei der Anteil an Propylenpolymeren entsprechend reduziert wird.

Vakuoleninitiierende Füllstoffe sind feste Teilchen, die mit der Polymermatrix unverträglich sind und beim Verstrecken der Folien zur Bildung von vakuolenartigen Hohlräumen führen. In der Regel haben die vakuoleninitiierenden Füllstoffe eine Mindestgröße von 1 µm, um zu einer effektiven, d.h. opak machenden Menge an Vakuolen zu führen. Im Allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle.

Übliche vakuoleninitiierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere Copolymere von cyclischen Olefinen (COC) wie in EP-A-O 623 463 beschrieben, Polyester, Polystyrole, Polyamide, halogenierte organische Polymere, wobei Polyester wie beispielsweise Polybutylenterephthalate und Cycloolefincopolymere bevorzugt sind. Unverträgliche Materialien bzw. unverträgliche Polymere im Sinne der vorliegenden Erfindung bedeutet, daß das Material bzw. das Polymere in der Folie als separates Teilchen bzw. als separate Phase vorliegt.

In einer weiteren opaken Ausführungsform kann die Basisschicht bzw. die einschichtige Basisfolie zusätzlich oder alternativ zu den vakuoleninitiierenden Füllstoffen Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der Basisschicht, bzw. auf das Gewicht der Basisfolie. Auch hier gilt, dass der Anteil an Propylenpolymeren entsprechend reduziert wird.

Pigmente sind im Sinne der vorliegenden Erfindung unverträgliche Teilchen, die im Wesentlichen nicht zur Vakuolenbildung beim Verstrecken der Folie führen. Die z.B. färbende Wirkung der Pigmente wird durch die Teilchen selbst verursacht. Der Begriff "Pigmente" ist im Allgemeinen an einen mittleren Teilchendurchmesser im Bereich von 0,01 bis maximal 1 µm gebunden und umfasst sowohl sogenannte "Weißpigmente", welche die Folien weiß einfärben, als auch "Buntpigmente", welche der Folie eine bunte oder schwarze Farbe verleihen. Im Allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolin-Ton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden. Titandioxid ist besonders bevorzugt. Verschiedene Modifikationen und Beschichtungen von TiO₂ sind an sich im Stand der Technik bekannt.

Die Dichte der mehrschichtigen Basisfolie wird wesentlich von der Dichte der Basisschicht bestimmt. Im Allgemeinen liegt die Dichte der Basisschicht, bzw. die Dichte der Basisfolie in einem Bereich von 0,45 - 0,95g/cm³. Die Vakuolen reduzieren die Dichte, Pigmente erhöhen die Dichte der Basisschicht bzw. der Basisfolie gegenüber der Dichte von Polypropylen.

Die Deckschicht/en der mehrschichtigen Basisfolie können als siegelfähige Schicht/en ausgestaltet werden, wobei hierunter sowohl heißsiegelfähige als auch kaltsiegelfähige Schichten verstanden werden. Kaltsiegelbeschichtungen können direkt auf die Oberfläche einer einschichtigen Basisfolie aufgebracht werden. Im Allgemeinen ist es jedoch bevorzugt die Kaltsiegelbeschichtung auf die Deckschicht der mehrschichtigen Basisfolie aufzubringen. Geeignete Materialien für heißsiegelfähige Deckschicht/en sind die nachstehend genannten Copolymere und Terpolymere. Nicht siegelfähige Ausführungsformen der mehrschichtigen Basisfolie sind aus den für die Basisschicht beschriebenen Propylenhomopolymeren aufgebaut.

Die heißsiegelfähige Deckschicht/en der mehrschichtigen Basisfolie enthalten im Allgemeinen mindestens 80 Gew.-%, vorzugsweise 90 bis <100 Gew.-%, olefinische Polymere oder Mischungen daraus. Geeignete Polyolefine sind beispielsweise Polyethylene, Propylencopolymere und/oder Propylenterpolymere,

Geeignete Propylenco- oder Terpolymere sind im Allgemeinen aus mindestens 50 Gew.-% Propyleneinheiten und aus Ethylen- und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im Allgemeinen einen Schmelzflußindex von 3 bis 15 g/10min, vorzugsweise 3 bis 9 g/10min (230°C, 2,16 kg DIN EN ISO 1133) und einen Schmelzpunkt von 70 bis 145°C, vorzugsweise 90 bis 140°C (DSC).

Geeignete Polyethylene sind beispielsweise HDPE, MDPE, LDPE, LLDPE, VLDPE worunter HDPE und MDPE Typen besonders bevorzugt sind. Das HDPE hat im Allgemeinen einen MFI (50 N/190 °C) von größer 0,1 bis 50 g/10 min, vorzugsweise 0,6 bis 20 g/10min, gemessen nach DIN EN ISO 1133 und eine Viskositätszahl, gemessen nach DIN 53 728, Teil 4 oder ISO 1191, im Bereich von 100 bis 450 cm³/g, vorzugsweise 120 bis 280 cm³/g. Die Kristallinität beträgt 35 bis 80 %, vorzugsweise 50 bis 80 %. Die Dichte, gemessen bei 23 °C nach DIN EN ISO 1183-1, liegt im Bereich von >0,94 bis 0,96 g/cm^{3.}. Der Schmelzpunkt, gemessen mit DSC (Maximum der Schmelzkurve, Aufheizgeschwindigkeit 20 °C/min), liegt zwischen 120 und 140 °C. Geeignetes MDPE hat im Allgemeinen einen MFI (50 N/190 °C) von größer 0,1 bis 50 g/10 min, vorzugsweise 0,6 bis 20 g/10min, gemessen nach DIN EN ISO 1133. Die Dichte, gemessen bei 23 °C nach DIN EN ISO 1183-1, liegt im Bereich von >0,925 bis 0,94 g/cm^{3.}. Der Schmelzpunkt, gemessen mit DSC (Maximum der Schmelzkurve, Aufheizgeschwindigkeit 20 °C/min), liegt zwischen 115 und 130 °C.

Die Zwischenschicht/en der vier- und fünfschichtigen Ausführungsformen der mehrschichtigen Basisfolie sind im Allgemeinen aus den für die Basisschicht beschriebenen Propylenhomopolymeren aufgebaut. Opake Ausführungsformen der Basisfolie können in den Zwischenschichten die vorstehend für die Basisschicht beschriebenen Pigmente, im Allgemeinen in einer Menge von 2 bis 10 Gew.-%, vorzugsweise in einer Menge von 3 bis 7 Gew.-%, enthalten.

Zur Verbesserung der Haftung und der Bedruckbarkeit kann die Oberfläche der Basisfolie in an sich bekannter Weise mittels Corona, Flamme oder Plasma einem Verfahren zur Erhöhung der Oberflächenspannung unterworfen werden. Typischerweise liegt dann die Oberflächenspannung der so behandelten Basisfolie in einem Bereich von 35 bis 45 mN/m. Diese Oberflächenbehandlung kann auf einer oder auf beiden Oberflächen der Basisfolie erfolgen.

Die Basisfolie enthält im Allgemeinen in den jeweiligen Schichten übliche Stabilisatoren und Neutralisationsmittel in üblichen Mengen, sowie gegebenenfalls Antiblockmittel in der oder den Deckschichten. Als Gleitmittel und Antistatika werden den Schichten nur solche Additive zugesetzt, die die Haftung der nachfolgend aufgebrachten Primerschicht und Beschichtungen nicht beeinträchtigen oder die Menge solcher Additive wird entsprechend reduziert.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumcarbonat und/oder Dihydrotalcit (DHT) einer mittleren Teilchengröße von höchstens 0,7 µm, einer absoluten Teilchengröße von kleiner 10 µm und einer spezifischen Oberfläche von mindestens 40 m²/g. Im Allgemeinen werden Neutralisationsmittel in einer Menge von 50 bis 1000 ppm, bezogen auf die Schicht eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche Polymerisate wie Polymethylmethacrylat (PMMA) Polyamide, Polyester, Polycarbonate und dergleichen, bevorzugt werden Polymethylmethacrylat (PMMA), Siliciumdioxid und Calciumcarbonat. Die wirksame Menge an Antiblockmittel liegt im Bereich von 0,1 bis 2 Gew.-%, vorzugsweise 0,1 bis 0,5 Gew.-%, bezogen auf die jeweilige Deckschicht. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

### Herstellverfahren Basisfolie:

Die Herstellung der Basisfolie erfolgt mittels an sich bekannter Extrusions- bzw. Coextrusionsverfahren, wobei insbesondere das Stenterverfahren bevorzugt ist.

Hierzu werden die, den einzelnen Schichten der Folie entsprechenden, Schmelzen durch eine Flachdüse coextrudiert, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasma- corona- oder flammbehandelt.

Im Einzelnen wird hierbei wie beim Extrusionsverfahren üblich das Polymere bzw. die Polymermischung der einzelnen Schichten in einem Extruder komprimiert und verflüssigt, wobei gegebenenfalls zugesetzte Additive bereits im Polymer bzw. in der Polymermischung enthalten sein können. Alternativ können diese Zusatzstoffe auch über ein Masterbatch eingearbeitet werden.

Die Schmelzen werden dann gemeinsam und gleichzeitig durch eine Flachdüse (Breitschlitzdüse) gepreßt, und die ausgepreßte mehrschichtige Folie wird auf einer oder mehreren Abzugswalzen bei einer Temperatur von 5 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 4,5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 45 mN/m, vorzugsweise 37 bis 45 mN/m, insbesondere 38 bis 41mN/m.

Für die alternative Coronabehandlung wird die Folie zwischen zwei als Elektroden dienenden Leiterelementen hindurchgeführt, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 37 bis 45 mN/m bevorzugt sind.

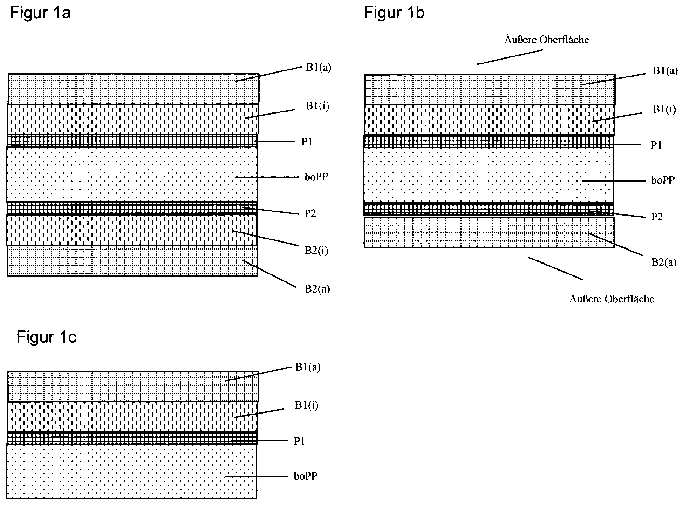

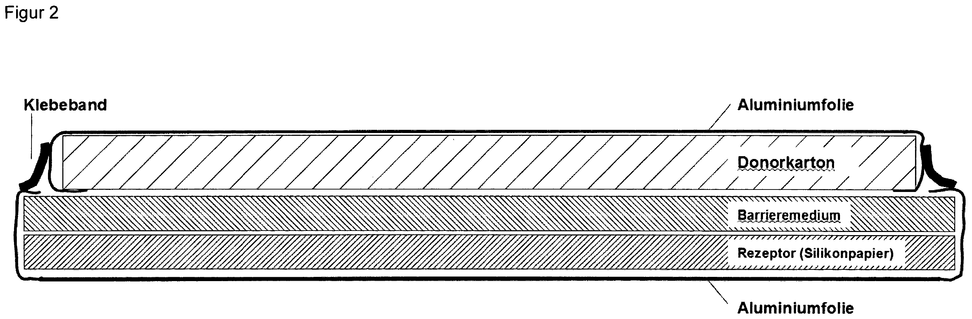

In den Figuren 1a bis 1c sind verschiedene mögliche Ausführungsformen der erfindungsgemäßen Folie dargestellt. Figur 1a zeigt eine Folie, die auf der ersten Seite der Basisfolie (boPP) eine Primerschicht P1 und eine innere Beschichtung B1(i) und eine äußere Beschichtung B1(a) aufweist und auf der zweiten Seite der Basisfolie (boPP) eine Primerschicht P2 und eine innere Beschichtung B2(i) und eine äußere Beschichtung B2(a) aufweist. Figur 1b zeigt eine Folie, die auf der ersten Seite der Basisfolie (boPP) eine Primerschicht P1 und eine innere Beschichtung B1(i) und eine äußere Beschichtung B1(a) aufweist und auf der zweiten Seite der Basisfolie (boPP) eine Primerschicht P2 und eine äußere Beschichtung B2(a) aufweist. Figur 1c zeigt eine Folie, die auf der ersten Seite der Basisfolie (boPP) eine Primerschicht P1 und eine innere Beschichtung B1(i) und eine äußere Beschichtung B1(a) aufweist und auf der zweiten Seite der Basisfolie (boPP) keine weiteren Schichten aufweist.

### Primerschicht/en

Die Basisfolie wird nach den an sich bekannten Verfahren auf mindestens einer Oberfläche mit einer Primerschicht versehen, um die Haftung der nachfolgend aufgebrachten Beschichtung zu verbessern.

Im Allgemeinen wird die Basisfolie zunächst auf der zu beschichtenden Seite mittels Flamme, Plasma oder Corona oberflächenbehandelt, um die Oberflächenspannung zu erhöhen und die Haftung des Primers auf der Basisfolie zu verbessern. Nach der Oberflächenbehandlung wird auf diese behandelte Oberfläche eine Primerschicht aufgebracht, im Allgemeinen eine wässrige Polyethyleniminlösung (z.B. 0,5 bis 5 Gew.-%, vorzugsweise 0,5 bis 3 Gew.-%) und getrocknet. Die wässrige Polyethyleniminlösung begünstigt die nachfolgende Beschichtung, wie beispielsweise in EP-A-0255870 beschrieben und wird als Lösung mit vorzugsweise 1Gew.-% Polyethylenimin eingesetzt. Primerschichten aus Polyethylenimin verbessern die Haftung gegenüber den nachfolgend aufgetragenen Beschichtungen und sind im Stand der Technik an sich bekannt und werden gemäß diesen bekannten Lehren aufgebracht. Grundsätzlich könne auch andere bekannte Primerschichten aufgetragen werden, welche die Haftung der nachfolgenden Beschichtung verbessern.

So ist es beispielsweise von Vorteil bei einer nachfolgenden Beschichtung aus halogenhaltigem Vinyl- und/oder Vinylidenpolymeren, insbesondere bei Beschichtungen mit Polyvinyliden-Dichlorid (PVDC), zusätzlich eine sekundäre Primerschicht auf Basis von Acrylat/Vinylacetat-Copolymer aufzubringen. Die Schichtdicke der sekundären Primerschicht beträgt üblicherweise 25 bis 100% der Schichtdicke der späteren Beschichtung aus den halogenhaltigem Vinyl- und/oder Vinylidenpolymeren, insbesondere Polyvinyliden-Dichlorid (PVDC).

Für beidseitig beschichtete Ausführungsformen der beschichteten Folie wird die gegenüberliegende Oberfläche der Basisfolie in der gleichen Weise behandelt und ebenfalls mit einer Primerschicht versehen, wobei hier die vorstehende Beschreibung der Primerschicht für diese zweite Primerschicht in analoger Weise gilt.

Das Auftragsgewicht der jeweiligen Primerschicht beträgt im Allgemeinen 0,02 bis 1,0 g/m², vorzugsweise 0,5 bis 0,5 g/m². Die Primerschicht/en sind im Allgemeinen im Wesentlichen frei von Antiblockmitteln, Gleitmitteln oder anderen Zusatzstoffen, die die Haftung gegenüber der Folie oder die Haftung gegenüber der nachfolgenden Beschichtung oder andere Folieneigenschaften beeinträchtigen.

### Beschichtung/en

Die erfindungsgemäße beschichtete Folie umfasst mindestens eine mehrschichtige Beschichtung, welche Acrylatpolymere enthält. Die mehrschichtige Beschichtung kann auf einer oder beiden Seiten der Basisfolie mit Primerschicht/en vorliegen. Hierbei können alle Schichten der Beschichtung das gleiche Polymere enthalten oder für die Beschichtungen werden verschiedene Polymere eingesetzt, z.B. Acrylat-Polymere. Die mehrschichtige Beschichtung umfasst eine innere Beschichtung B(i), welche sich im Kontakt mit der Primerschicht befindet und eine äußere Beschichtung B(a), welche sich im Kontakt mit der inneren Beschichtung B(i) befindet. Es ist erfindungswesentlich, dass die innere Beschichtung B(i) keine partikelförmigen Zusatzstoffe enthält, bzw. deren Menge so geringfügig ist, dass die BarriereEigenschaften der Folie nicht beeinträchtigt werden. Des Weiteren ist es erfindungswesentlich, dass die äußere Beschichtung B(a) mindestens einen reibungsvermindernden Zusatzstoff enthält. Für die innere und die äußere Beschichtung können grundsätzlich die gleichen Polymeren oder verschiedene Polymere eingesetzt werden. Die Beschichtung wird als mehrschichtig bezeichnet, da sich die beiden Schichten zumindest hinsichtlich ihrer Zusatzstoffe unterscheiden. Im Allgemeinen werden die genannten Polymeren nicht untereinander in einer Schicht gemischt, d.h. diese sind jeweils als konkrete Schicht aus den Polymeren angeordnet. Dies schließt selbstverständlich den Einsatz von Mischpolymerisaten, z.B. die Beschichtung mit Copolymeren nicht aus.

Im Allgemeinen enthalten die jeweilige Schichten B(i) und B(a) mindesten 80 bis ~100 Gew.-% der Acrylat-Polymeren, vorzugsweise 95 bis <100 Gew.-%, d.h. die jeweiligen Schichten sind im Allgemeinen nur aus den genannten Polymeren (i), (ii) oder (iii) aufgebaut und enthalten die beschriebenen Zusatzstoffe in der äußeren Beschichtung B(a) und gegebenenfalls übliche Zusätze in geringen Mengen von <5 Gew.-%, so dass die wesentlichen Folieneigenschaften von diesen üblichen Zusätzen nicht negativ beeinflusst werden.

Als Acrylatpolymere (i) werden Acrylat-Homopolymere und/oder Acrylat-Copolymere verwendet. Acrylat-Homopolymere sind beispielsweise Polyalkylacrylate, vorzugsweise Polymethylmethacrylat, Polyethylacrylat, Polyethylmethacrylat, Polymethylacrylate und/oder Polybutylacrylat. Acrylatcopolymere basieren gleichfalls bevorzugt auf Alkylacrylaten, vorzugsweise Methylmethacrylat, Ethylacrylat, Ethylmethacrylat und/oder Methylacrylat und enthalten zusätzlich als Comonomere beispielsweise Acrylsäureeinheiten oder Styroleinheiten. Derartige Materialien sind beispielsweise unter der Bezeichnung NeoCryl BT-36 und NeoCryl FL-715 von der Firma DSM Coating Resins (Niederlande) im Markt erhältlich.

Die jeweiligen Polymeren für die Beschichtung werden als Dispersion, insbesondere wässrige Dispersion, aufgetragen deren Feststoffgehalt im Allgemeinen 20-50 Gew.-% beträgt.

### Innere Beschichtung B(i) ohne Zusatzstoffe

Erfindungsgemäß wird mindestens eine Seite der Basisfolie mit Primerschicht zweimal mit einem der vorstehend genannten Polymeren beschichtet. Somit umfasst die erfindungsgemäß beschichtete Folie die beschriebene Basisfolie, mindestens eine erste Primerschicht P1, eine erste innere Beschichtung B1(i), welche sich in Kontakt mit der vorher aufgebrachten Primerschicht P1 befindet und eine weitere äußere Beschichtung B1(a), die sich in Kontakt mit der inneren Beschichtung B1(i) befindet und die außenliegende Schicht der beschichteten Folie bildet. Die Reihenfolge der Schichten in der Folie entspricht somit Basisfolie / Primerschicht P1 / erste innere Beschichtung B1(i) / erste äußere Beschichtung B1(a). Erfindungsgemäß enthält die innere Beschichtung B1(i) keine partikelförmigen Zusatzstoffe.

In einer bevorzugten Ausführungsform ist die vorstehend beschriebene mehrschichtige Beschichtung auf beiden Oberflächen der Basisfolie mit beidseitigen Primerschichten aufgebracht. Diese Folie umfasst dann auf der zweiten Seite der Basisfolie eine zweite Primerschicht P2, eine zweite innere Beschichtung B2(i), welche sich in Kontakt mit der vorher aufgebrachten Primerschicht P2 befindet und eine zweite äußere Beschichtung B2(a), die sich in Kontakt mit der zweiten inneren Beschichtung B2(i) befindet und die gegenüberliegende außenliegende Schicht der beschichteten Folie bildet. Erfindungsgemäß enthält die innere Beschichtung B2(i) ebenfalls keine partikelförmigen Zusatzstoffe. Diese Ausführungsformen haben somit den folgenden Aufbau B2(a) / B2(i) / P2 / bopp / P1 / B1(i) / B1(a).

In einer weiteren Ausführungsform sind auf der zweiten Oberfläche der Basisfolie eine zweite Primerschicht P2 und eine einschichtige zweite Beschichtung B2(a) aufgebracht, die in direktem Kontakt mit der Primerschicht P2 steht. Die Zusammensetzung dieser einschichtigen Beschichtung entspricht dann hinsichtlich Zusammensetzung und Auftragsgewicht der vorstehend beschriebenen äußeren Beschichtung B2(a) oder B1(a). Diese Ausführungsformen haben somit den folgenden Aufbau B2(a) / P2 / bopp / P1 / B1(i) / B1(a).

Vorzugsweise ist/sind die innere/n Beschichtung/en B1(i) und B2(i), nachstehend zusammen B(i) genannt aus Polyacrylaten aufgebaut (i), vorzugsweise aus Polymethylmethacrylat, Polyethylacrylat, Polyethylmethylacrylat, Polymethylacrylate und/oder Polybutylacrylat, wobei diese Acrylatpolymeren auch als Copolymere mit mindestens einem weiteren Co-Monomere polymerisiert vorliegen können. Erfindungsgemäß enthält/enthalten die innere/n Beschichtunge/en keine partikelförmigen Zusatzstoffe, wie beispielsweise Antiblockmittel. Besonders bevorzugt enthält/enthalten die innere/n Beschichtunge/en auch keine Wachse.

Die innere/n Beschichtung/en B(i), vorzugsweise Polyacrylatschicht, wird/werden nach Auftrag und Trocknung der Primerschicht oder Primerschichten direkt auf die Oberfläche der Primerschicht/en aufgetragen und ebenfalls getrocknet. Das Auftragsgewicht der inneren Beschichtung/en B(i), vorzugsweise Polyacrylatschicht, beträgt nach Trocknung jeweils 0,5 bis 1,5 g/m².

### Äußere Beschichtung B(a) mit Zusatzstoffen

Nach Auftrag der inneren Beschichtung B(i) erfolgt der Auftrag der äußeren Beschichtung B1(a) und gegebenenfalls B2(a), nachstehend zusammen B(a) genannt, auf der Oberfläche der inneren Beschichtung/en B(i) mit den vorstehend genannten Polymeren (i), (ii) oder (iii). Erfindungsgemäß enthält/enthalten die äußere/n Beschichtung/en B(a) reibungsvermindernde Zusatzstoffe, vorzugsweise partikelförmige Zusatzstoffe und/oder Wachse.

Vorzugsweise ist/sind die äußere/n Beschichtung/en B(a) aus den Polyacrylaten, insbesondere aus Polymethylmethacrylat, Polyethylacrylat, Polyethylmethylacrylat, Polybutylacrylat und/oder Polymethylacrylate, aufgebaut und enthält/enthalten vorzugsweise 0,01 bis 15 Gew.-% reibungsvermindernde Zusatzstoffe, vorzugsweise partikelförmige Zusatzstoffe, insbesondere Antiblockmittel und/oder 1 bis 15 Gew.-% Wachse. Bevorzugte partikelförmige Zusatzstoffe sind beispielsweise Silikate, SiO2, Polymethylmethacrylat-Partikel, vernetzte Siloxane (z.B. Tospearl^{®}) oder Talkum, worunter SiO2 und/oder Silikate bevorzugt sind. Die angegebenen Gewichtsprozente beziehen sich jeweils auf das Gewicht der getrockneten Beschichtung/en B(a). Das Auftragsgewicht der äußeren Beschichtung/en B(a), vorzugsweise Polyacrylatschicht, beträgt nach Trocknung jeweils 0,5 bis 1,5 g/m². Das Auftragsgewicht der Primerschicht und der inneren Beschichtung und der äußeren Beschichtung auf einer Seite der Folie beträgt in Summe vorzugsweise 1,5 bis 4g/m².

Bevorzugte Wachse sind beispielsweise natürliche Wachse, Paraffinwachse, mikrokristalline Wachse, Carnaubawachs, Japanwachs, Montanwachs usw. oder synthetische Wachse, z.B. Polyethylenwachse. Diese Wachse werden als Dispersionen mit den Beschichtungslösungen aus den Polymeren (i), (ii) oder (iii) vermischt und die wachshaltigen Mischungen werden zur Beschichtung eingesetzt.

Bevorzugte wässrige Beschichtungslösungen für die äußere Beschichtung/en B(a) auf Basis der Acrylatpolymeren umfassen 70-80 Gew.-% Polyacrylat-Dispersion, 2-10 Gew.-% Wachs-Dispersion, 2-10 Gew.-% amorphe Kieselsäure und 0,01-5 Gew.-% SiO2 als Antiblockmittel. Das SiO2 hat im Allgemeinen eine mittlere Teilchengröße von 1 bis 5µm, vorzugsweise 3 bis 4µm.

In Rahmen der vorliegenden Erfindung wurde gefunden, daß die Sperrwirkung der Beschichtungen aus Acrylatpolymeren gegenüber Mineralölen, durch Zusätze wie Antiblockmittel und/oder Wachsen zur Verbesserung von Reibung und Gleitverhalten beeinträchtigt wird. Es wurden verschiedene Zusatzstoffe in einer einschichtigen Polyacrylatbeschichtung verwendet, deren Mengen wurden variiert sowie dickere Polyacrylatschichten getestet, aber es konnte auf diese Weise keine Folie hergestellt werden, welche hinsichtlich Sperrwirkung und Verarbeitungseigenschaften, insbesondere hinsichtlich Sperrwirkung und Reibung ein hinreichend gutes Eigenschaftsprofil aufwies. Überraschenderweise können eine gute Reibung und eine gute Sperrwirkung gleichzeitig realisiert werden, wenn eine innere Beschichtung B(i) umfassend eine Polyacrylatschicht ohne partikelförmige Zusatzstoffe, mit einer äußeren Beschichtung B(a) umfassend eine Polyacrylatschicht kombiniert wird, welche Partikel enthält. Überraschenderweise entfalten die Partikel in der an sich bekannten und gewünschten Weise eine reibungsvermindernde Wirkung, aber gleichzeitig wird die Sperrwirkung der Polyacrylatbeschichtung nicht beeinträchtigt, sondern überraschend verbessert.

Wenngleich die verbesserte Reibung durch den Zusatz der Partikel zu der äußeren Polyacrylatschicht grundsätzlich zu erwarten war überraschte es, daß zwei Schichten mit mäßiger bzw. schlechter Sperrwirkung in Kombination eine sehr gute Sperrwirkung zeigen. Die vorliegende Erfindung basiert somit auf einem synergistischen Effekt, der in dieser Weise nicht vorhersehbar war. Die innere Beschichtung mit einem Auftragsgewicht von 0,5 bis 1,5g/m² hat alleine nur eine mäßige Sperrwirkung gegenüber Mineralölen. Außerdem ist eine solche Folie wegen schlechter Reibung nicht zu verarbeiten Die äußere Beschichtung mit Antiblockmitteln verhindert de facto alleine die Migration der Mineralölen gar nicht. Es ist daher äußerst überraschend, dass die Kombination der äußeren Schicht ohne wesentliche Sperrwirkung mit der dünne inneren Schicht mit mäßiger Sperrwirkung insgesamt eine viel bessere Wirkung zeigt als die theoretische Summe der beiden Schichten. Überraschend verbessert die äußere Schicht, die alleine keine oder kaum Wirkung hat die Sperrwirkung insgesamt erheblich.

Erfindungsgemäß kann damit eine Folie zur Verfügung gestellt werden, welche eine gute Sperrwirkung gegenüber Mineralölen bietet und gleichzeitig einen hervorragend niedrigen Reibungskoeffizienten aufweist und damit hinsichtlich der Verarbeitbarkeit alle Anforderungen erfüllt.

Die erfindungsgemäße beschichtete Folie hat einen Reibungskoeffizienten im Bereich von 0,1 bis 0,5, vorzugsweise von 0,2 bis 0,45. Die beschichtete Folie kann auf der oder den äußeren Oberflächen in üblicher Weise bedruckt und/oder laminiert werden.

Aus der erfindungsgemäßen beschichteten Folie werden in an sich bekannter Weise Lebensmittelverpackungen hergestellt. Hierfür kann die beschichtete Folie auf der oder den äußeren Oberflächen in üblicherweise bedruckt werden. In einer Ausführungsform werden mit an sich bekannten Technologien Beutelverpackungen oder Einschlagverpackungen aus der beschichteten Folie hergestellt, welche das Lebensmittel enthalten. Die gefüllte Beutel- oder Einschlagverpackung wird dann in einer weiteren umhüllenden Kartonverpackung verpackt. Die erfindungsgemäße mehrschichtige Beschichtung der Beutel- oder Einschlagverpackung verhindert die Migration der Mineralöle aus dem Karton in das Lebensmittel. In einer weiteren Ausführungsform kann der Karton mit der beschichteten Folie laminiert oder kaschiert werden. Aus dem beschichteten Karton wird dann eine Verpackung hergestellt, welche das Lebensmittel enthält. Diese Variante ist vorteilhaft für Verpackungen in denen das Lebensmittel andernfalls in einem direkten Kontakt mit dem Karton stehen würde.

### Definition Recyclingcarton:

Bei dem im Rahmen der vorliegenden Erfindung eingesetzten Karton auf Basis von Recyclingkarton handelt es sich um Kartonagen die nennenswerte Mengen von Mineralölen aufweisen und somit gemäß der VERORDNUNG (EG) Nr. 1935/2004 DER KOMMISSION vom 27. Oktober 2004 unterliegen.

Derartige Kartonagen auf Basis von Recyclingkarton enthalten typischerweise 300-1000 mg/kg Mineralöl. Diese Mineralöle werden als "mineral oil saturated hydrocarbons" (MOSH) oder als "mineral oil aromatic hydrocarbons" (MOAH) bezeichnet. Die MOSH und MOAH Mineralöle werden oftmals noch hinsichtlich ihrer Kohlenstoffketten spezifiziert, z.B. als MOSH 14-24, MOSH 24-35, MOAH 14-24 und MOAH 24-35, wobei die Zahlenwerte die Anzahl an Kohlenstoffatomen widergibt. Die genaue Zusammensetzung der MOSH und MOAH Mineralöle hängt von der Art des Recyclingkartons ab, d.h. die Fraktionen an MOSH 14-24, MOSH 24-35, MOAH 14-24 und MOAH 24-35 sind unterschiedlich. Die erfindungsgemäße Verpackung ist somit so zu gestalten, dass der Karton und das Lebensmittel keinen direkten Kontakt haben.

Eine Bestimmung aller Substanzen, die in Druckfarben (z.B. als Lösemittel) und damit als Verunreinigung im Recyclingkarton vorkommen können, ist aufgrund der Vielzahl dieser Substanzen mit vertretbarem Aufwand nicht möglich. Darüber hinaus ist für die meisten Substanzen noch nicht abschließend geklärt, ob sie toxikologisch wirken. Eine funktionelle Barriere sollte somit möglichst den Übergang aller Substanzen in das Lebensmittel verhindern oder so weit vermindern, dass eine Gesundheitsgefährdung ausgeschlossen werden kann. Damit entfällt die Notwendigkeit eine Vielzahl von Stoffen untersuchen und toxikologisch bewerten zu müssen. Im Kantonalen Labor Zürich wurde in Zusammenarbeit mit Koni Grob eine Prüfmethode entwickelt, die eine Bewertung von Barrieremedien hinsichtlich der generellen Wirksamkeit erlaubt (SVI Guideline 2015.01_Innenbeutel). Diese Methode basiert auf Untersuchungen mit n-Heptadekan (C17), Dipropylphthalat (DPP) und 4-Methylbenzophenon (MBP) als Surrogatstoffe. Hierbei wird angenommen, dass ein Medium welches den Durchtritt von n-Heptadekan (C17), Dipropylphthalat (DPP) und 4-Methylbenzophenon (MBP) wirksam verhindert auch eine Barriere für die Mineralölverunreinungen des Recyclingkartons darstellt.

Die erfindungsgemäße Folie mit mehrschichtiger Beschichtung weist eine besonders gute Barriere gegenüber den Surrogatstoffen n-Heptadekan (C17), Dipropylphthalat (DPP) und 4-Methylbenzophenon (MBP) auf und bildet somit auch eine wirksame Barriere gegenüber den MOSH und MOAH Anteilen der Mineralöle.

Die erfindungsgemäße Folie kann besonders vorteilhaft zur Herstellung von Lebensmittelverpackungen umfassend Recyclingkarton verwendet werden, beispielsweise in dem die erfindungsgemäße Folie mit dem Karton kaschiert oder laminiert wird. Symmetrische Ausführungsformen der Folie mit zusätzlichen inneren Beschichtungen B(i) auf beiden Seiten können mit der ersten oder der zweiten Seite mit dem Karton verbunden werden. Beschichtete Folien die nur auf einer (ersten) Seite die mehrschichtige Beschichtung aufweisen, können grundsätzlich mit dieser ersten oder mit der gegenüberliegenden zweiten Seite mit den Karton verbunden werden. Hier ist es bevorzugt die gegenüberliegende zweite Seite mit dem Karton zu verbinden, so dass das sich das Lebensmittel in Kontakt mit der mehrschichtigen Beschichtung befindet. Diese Ausführungsform ist besonders vorteilhaft und zeigt die geringsten Kontaminationen des Lebensmittels..

Zur Charakterisierung der Rohstoffe und der Folien wurden die folgenden Meßmethoden benutzt:

### Schmelzflußindex

Der Schmelzflußindex wurde nach DIN EN ISO 1133 bei 2,16 kg Auflagegewicht und 230 °C gemessen.

### Bestimmung des Ethylengehalts

Der Ethylengehalt der Copolymeren wird mittels 13C-NMR Spektroskopie bestimmt. Die Messungen wurden mit einem Kernresonanzspektrometer der Firma Bruker Avance 360 durchgeführt. Das zu charakterisierende Copolymer wird in Tetrachlorethan gelöst, so daß eine 10% Mischung entsteht. Als Bezugsstandard wurde Octamethyl- tetrasiloxan (OTMS) zugegeben. Das Kernresonanzspekrum wurde bei 120°C gemessen. Die Auswertung der Spektren erfolgte wie in J.C. Randall Polymer Sequence Distribution (Academic Press, New York, 1977) beschrieben.

### Schmelzpunkt und Schmelzenthalpie

Die Bestimmung des Schmelzpunkt und der Schmelzenthalpie erfolgt mittels DSC-(Differential-Scanning-Calometrie) Messung (DIN 51 007 und DIN 53 765). Einige Milligramm (3 bis 5 mg) des zu charakterisierenden Rohstoffs werden in einem Differentialkalorimeter mit einer Heizgeschwindigkeit von 20°C pro Minute aufgeheizt. Es wird die Wärmeflußrate gegen die Temperatur aufgetragen und der Schmelzpunkt als Maximum der Schmelzkurve und die Schmelzenthalpie als Fläche des jeweiligen Schmelzepeaks ermittelt.

### Dichte

Die Dichte wird nach DIN EN ISO 1183-1, bestimmt.

### Reibung

Die Reibung wird gemäß DIN EN ISO 8295 bzw. ISO 8295 bestimmt.

### Oberflächenspannung

Die Oberflächenspannung wurde mittels Tintenmethode nach ISO 8296 bestimmt.

### Migrationsmessung

Die Migrationsmessungen erfolgen in Anlehnung am die SVI Guideline 2015.01_Innenbeutel. Für die Prüfung eines Barrieremediums wird zunächst von einem Karton ohne Recyclatanteil ausgegangen, d.h. dieser Karton wurde nur aus noch nicht verwendeten Cellulosefasern hergestellt. Der Karton hat ein Flächengewicht von ca. 300 g/m². Der Karton wird für die Verwendung als Donor mit n-Heptadekan (C17), Dipropylphthalat (DPP) und 4-Methylbenzophenon (MBP), den sogenannten Surrogatstoffen, versetzt, in Alufolie eingeschlagen und anschließend für zwei Wochen bei 40°C konditioniert, damit sich die Surrogatstoffe gleichmäßig im Karton verteilen. Der Gehalt an Surrogatstoffen im Karton wird nach dieser Lagerung geprüft und sollte dann ca. 40mg/kg (= 100%) betragen. Dieser Karton wird dann als Donor in der nachfolgenden Messung verwendet.

Hierfür wird die zu prüfende beschichtete Folie (Barrieremedium) flächig auf den Donor aufgebracht. Über das zu prüfende Barrieremedium wird ein Silikonpapier (Fotokopierpapier mit 115g/m² getränkt mit 20% Dimethylpolysiloxan), der sog. Rezeptor gelegt, der die Surrogatstoffe, die das Barrieremedium im Laufe der Prüfung passieren, aufnehmen kann. Die einzelnen Lagen werden ggf. mit einem Klebeband fixiert. Donor, Barrieremedium und Rezeptor werden dann zusammen in Aluminiumfolie eingeschlagen. Dieses Paket wird 76 Tage im Wärmeschrank bei 40°C gelagert.

Der Rezeptor wird nach 76 Tagen dem Paket entnommen und auf den Gehalt an Surrogatstoff analysiert. Diese Bestimmung der Surrogatstoffe im Rezeptor erfolgt gaschromatographisch mit einer nachgeschalteten FID-Einheit. Diese MeßErgebnisse werden über die Arrhenius-Gleichung auf 365 Tage bei Raumtemperatur umgerechnet. In der Tabelle 3 werden diese umgerechneten Werte als Ergebnis angegeben, d.h. wieviel % der Surrogatstoffe des Donors in den Rezeptor nach 365 Tagen bei Raumtemperatur übergehen. Idealerweise sollten nach 365 Tagen bei Raumtemperatur nicht mehr als 1% von jedem Surrogatstoff in den Rezeptor übergegangen sein.

Die Erfindung wird nunmehr durch die nachfolgenden Beispiele erläutert.

### Herstellung der Basisfolie:

### BOPP-Basisfolie F1

Es wurde durch Coextrusion und anschließende stufenweise Orientierung in Längs- und Querrichtung eine transparente dreischichtige Folie mit beidseitigen Deckschichten und mit einer Gesamtdicke von 20 µm hergestellt. Die Deckschichten hatten jeweils eine Dicke von jeweils 0,9 µm.

### Basisschicht:

| | |
|---|---|
| Ca. 100 Gew.-% | isotaktisches Propylenhomopolymer mit einem Schmelzpunkt von 166 °C und einem Schmelzflußindex von 3,4 g/10min. |
| Deckschichten: | |
| ca. 100 Gew.-% | statistische Ethylen-Propylen-Butylen-Terpolymer mit einem Ethylengehalt von 3 Gew.-% und einem Butylengehalt von 7 Gew.-% (Rest Propylen), mit einem Schmelzpunkt von 133°C und einem Schmelzflussindex von 5,5 g/10min. |
| 0,1 Gew.-% | SiO₂ als Antiblockmittel mit einer mittleren Teilchengröße von 4,5 µm |

Die Herstellungsbedingungen in den einzelnen Verfahrensschritten waren:

| | | |
|---|---|---|
| Extrusion: | Temperaturen Basisschicht: | 260 °C |
| | Deckschichten: | 240 °C |
| | Temperatur der Abzugswalze: | 20 °C |
| Längsstreckung: | Temperatur: | 110 °C |
| | Längsstreckverhältnis: | 5,0 |
| Querstreckung: | Temperatur: | 160 °C |
| | Querstreckverhältnis: | 9 |
| Fixierung: | Temperatur: | 140 °C |
| | Konvergenz: | 20 % |

Alle Schichten der Folie enthielten Neutralisationsmittel und Stabilisatoren in den üblichen Mengen.

Beide Oberflächen der Basisfolie wurden mittels Corona zur Erhöhung der Oberflächenspannung vorbehandelt.

### Primer und Polyacrylat-Beschichtung:

Auf beide Seiten der vorstehend beschriebenen unbeschichteten Basisfolie gemäß Beispiel F1 wird zunächst ein Primer aus einer 1Gew.-%-igen Polyethylenimin-Dispersion aufgebracht und getrocknet. Das Auftragsgewicht der Primerschicht beträgt nach Trocknung jeweils ca. 0,1 g/m². Anschließend wurden auf beide getrocknete Primerschichten Beschichtungen aus Acrylatpolymer aufgebracht. Hierfür wurden zwei verschiedene Polyacrylat-Dispersionen verwendet:
A(i): Acrylat ohne Zusatzstoffe für die innere Beschichtung B(i)
76,8 Gew.-% DSM NeoCryl^{®} FL-715
23,2 Gew.-% Wasser

Der Feststoffgehalt dieser Dispersion betrug insgesamt ca. 20 - 25Gew.-%. Die Beschichtungs-Dispersion A(i) enthielt keine weiteren Zusatzstoffe und war somit frei von Antiblockmitteln und Wachsen.

A(a): Acrylat mit Wachsen und Antiblockmitteln für die äußere Beschichtung B(a)
76,8 Gew.-% DSM NeoCryl^{®} FL-715
   5,2 Gew.-% Michelman Michem^{®} Lube 160PF
   7,8 Gew.-% Grace Davison Ludox^{®} HS40
   0,2 Gew.-% einer 10%igen Dispersion von Grace Davison Syloid^{®} 244 in Wasser
10,0 Gew.-% Wasser

Der Feststoffgehalt dieser Dispersion betrug insgesamt ca. 20 -25Gew.-%.

### Beispiel B1:

Die erste Seite oder Oberfläche der Basisfolie mit getrockneten Primerschichten P1 und P2 wurde mittels Gravurwalze mit der Dispersion A(a) mit Zusatzstoffen auf der Primerschicht P1 beschichtet und getrocknet. Anschließend wurde die gegenüberliegende zweite Seite -gleichfalls mittels einer Gravurwalze- mit der Dispersion A(i) (ohne Zusatzstoffe) beschichtet. Nach Trocknung dieser inneren Polyacrylat-beschichtung erfolgte auf der zweiten Seite der Folie der Auftrag einer weiteren Beschichtung mit der Dispersion A(a). Nach Trocknung erhält man eine Folie, welche beidseitig Polyacrylat-Beschichtungen aufweist und einem Schichtaufbau von B1(a) / P1 / F1 / P2 / B2(i) / B2(a) entspricht.

Das Auftragsgewicht der einschichtigen Polyacrylatbeschichtung B1(a) auf der Seite 1 der Folie beträgt ca. 0,9 g/m². Das Auftragsgewicht der zweischichtigen Polyacrylatbeschichtung B2(i) / B2(a) auf der Seite 2 der Folie betrug ca. 2,0 g/m², wobei jede Polyacrylatschicht in etwa 1 g/m² ausmachte.

Auf diese Weise wurde eine Folie hergestellt welche den folgenden Schichtaufbau hatte: äußere Polyacrylatschicht mit Antiblock und Wachs / Primer / boPP / Primer / innere Polyacrylatschicht / äußere Polyacrylatschicht mit Antiblock und Wachs.

### Beispiel B2:

Es wurde eine beschichtete Folie wie in B1 beschrieben hergestellt. Im Unterschied zu Beispiel B1 wurde auf der Seite 1 zusätzlich eine zweite innere Polyacrylatschicht aus der Dispersion A(i) aufgebracht. Das Auftragsgewicht dieser zweiten inneren Polyacrylatschicht betrug ca. 1,0g/m². Auf diese Weise wurde eine Folie hergestellt, welche auf beiden Seiten eine innere Polyacrylatschicht ohne Zusatzstoffe und eine äußere Polyacrylatschicht mit Antiblock und Wachsen aufwies. Die Folie hatte somit den folgenden Schichtaufbau: äußere Polyacrylatschicht mit Antiblock und Wachs / innere Polyacrylatschicht / Primer / boPP / Primer / innere Polyacrylatschicht / äußere Polyacrylatschicht mit Antiblock und Wachs. Die übrigen Beschichtungen der Folie wurden gegenüber Beispiel B1 nicht verändert.

### Beispiel B3:

Es wurde eine beschichtete Folie wie in B2 beschrieben hergestellt. Im Unterschied zu Beispiel B2 wurde das Auftragsgewicht der inneren Polyacrylatschicht auf der Seite 2 der Folie erhöht. Das Auftragsgewicht der inneren Polyacrylatschicht ohne Antiblockmittel und ohne Wachs betrug jetzt 1,3g/m². Ansonsten wurden die Beschichtungen der Folie gegenüber Beispiel B1 nicht verändert.

### Beispiel B4:

Es wurde eine beschichtete Folie wie in B2 beschrieben hergestellt. Im Unterschied zu Beispiel B2 wurde das Auftragsgewicht der beiden inneren Polyacrylatschichten erhöht. Das Auftragsgewicht der inneren Polyacrylatschichten ohne Antiblockmittel und ohne Wachs betrug jetzt jeweils 1,3g/m². Ansonsten wurden die Beschichtungen der Folie gegenüber Beispiel B2 nicht verändert.

### Beispiel B5:

Es wurde eine beschichtete Folie wie in B1 beschrieben hergestellt. Im Unterschied zu Beispiel B1 wurde auf der ersten Seite der Folie nicht mit der Dispersion A(a) beschichtet. Stattdessen wurde auf die Primerschicht P1 der ersten Seite eine zweite Primerschicht aus
60,5 Gew.-% DSM NeoCryl^{®} FL-711
10,0 Gew.-% Vinavil MF2
   1,0 Gew.-% DSM Crosslinker^{®} CX-100
   4,0 Gew.-% iso-Propanol
24,5 Gew.-% Wasser
aufgetragen. Das Auftragsgewicht der zweiten Primerschicht betrug ca. 0,5 g/m². Anschließend wurde diese sekundäre Primerschicht mit einer PVDC Dispersion der folgenden Zusammensetzung beschichtet:
86,5 Gew.-% Solvin Diofan^{®} A 114
4,0 Gew.-% Michelman Michem^{®} Lube 160PF
0,5 Gew.-% Lanxess Mersolat^{®} H30
1,0 Gew.-% einer 12%igen Dispersion von Grace Davison Syloid^{®} 244 in Wasser
8,0 Gew.-% Wasser

Das Auftragsgewicht der PVDC Beschichtung betrug 0,9g/m². Ansonsten wurden die Beschichtungen der Folie gegenüber Beispiel B2 nicht verändert.

### Vergleichsbeispiel VB1:

Es wurde eine beschichtete Folie wie in B1 beschrieben hergestellt. Im Unterschied zu Beispiel B1 wurde die innere Polyacrylatschicht auf der Seite 2 weggelassen.

Auf diese Weise wurde eine Folie hergestellt welche den folgenden Schichtaufbau hatte: äußere Polyacrylatschicht mit Antiblock und Wachs / Primer / boPP / Primer / äußere Polyacrylatschicht mit Antiblock und Wachs. Die äußeren Beschichtungen der Folie wurden gegenüber Beispiel B1 nicht verändert.

### Vergleichsbeispiel VB2:

Es wurde eine beschichtete Folie wie in VB1 beschrieben hergestellt. Im Unterschied zu Beispiel VB1 wurde das Auftragsgewicht der Polyacrylatschicht B2(a) auf der Seite 2 der Folie erhöht. Das Auftragsgewicht dieser äußeren Polyacrylatschicht B2(a) mit Antiblockmittel und Wachs betrug jetzt 1,8g/m².

### Vergleichsbeispiel VB3:

Es wurde eine beschichtete Folie wie in B2 beschrieben hergestellt. Im Unterschied zu Beispiel B2 wurde auf beide Seiten nur eine Beschichtung aus der Dispersion A(i) aufgetragen, d.h. die beiden äußeren Polyacrylatschichten B1(a) weggelassen.

Auf diese Weise wurde eine Folie hergestellt welche den folgenden Schichtaufbau hatte: äußere Polyacrylatschicht ohne Antiblock und ohne Wachs / Primer / boPP / Primer / äußere Polyacrylatschicht ohne Antiblock und ohne Wachs. Diese Folie war wegen schlechter Reibung und schlechtem Laufverhalten nach dem Aufwickeln nicht mehr zu verarbeiten.

Die Zusammensetzung der Folien nach den Beispielen und den Vergleichsbeispielen sind in der nachstehenden Tabelle 1 nochmal übersichtlich zusammengefasst:

**Tabelle 1**

| | Bsp. 1 | Bsp. 2 | Bsp. 3 | Bsp. 4 | Bsp. 5 | VB 1 | VB 2 | VB3 |
|---|---|---|---|---|---|---|---|---|
| B1(a) | 0,9g/m² | 0,8g/m² | 0,9g/m² | 1,0g/m² | 0,9g/m^{2*} | 0,8g/m² | 0,9g/m² | |
| B1(i) | | 1,0g/m² | 0,9g/m² | 1,3g/m² | | | | 0,9g/m² |
| P1 | 0,1g/m² | 0,1g/m² | 0,1g/m² | 0,1g/m² | 0,6g/m² | 0,1g/m² | 0,1g/m² | 0,1g/m² |
| BOPP | 20µm | 20µm | 20µm | 20µm | 20µm | 20µm | 20µm | 20µm |
| P2 | 0,1g/m² | 0,1g/m² | 0,1g/m² | 0,1g/m² | 0,1g/m² | 0,1g/m² | 0,1g/m² | 0,1g/m² |
| B2(i) | 1,0g/m² | 1,0g/m² | 1,3g/m² | 1,3g/m² | 1,0g/m² | | | 0,9g/m² |
| B2(a) | 1,0g/m² | 0,9g/m² | 1,0g/m² | 1,0g/m² | 1,0g/m² | 0,9g/m² | 1,8g/m² | |

| | | | | | | | | |
|---|---|---|---|---|---|---|---|---|
| *zusätzliche 2. Primerschicht und PVDC Beschichtung | | | | | | | | |

Die Ergebnisse zu den Beispielen und den Vergleichsbeispielen sind in der Tabelle 2 zusammengefasst:

**Tabelle 2**

| | | | Messung erfolgte 76 Tagen nach Lagerung der Proben bei 40°C; dies entspricht einer Dauer von 365 Tagen bei Raumtemperatur | | | | |
|---|---|---|---|---|---|---|---|
| Beispiel | Folienseite | AuftragsGewicht Summe | COF | C17 | DPP | MBP | |
| B1 | Seite 1 | 0,9 g/m² | ++ | + | ++ | ++ | |
| | Seite 2 | 2,0 g/m² | ++ | | | | Innere Schicht ohne Zusatz |
| B2 | Seite 1 | 1,8 g/m² | ++ | ++ | ++ | ++ | Innere Schicht ohne Zusatz |
| | Seite 2 | 1,9 g/m² | ++ | | | | Innere Schicht ohne Zusatz |
| B3 | Seite 1 | 1,8 g/m² | ++ | ++ | +++ | +++ | Innere Schicht ohne Zusatz |
| | Seite 2 | 2,3 g/m² | ++ | | | | Innere Schicht ohne Zusatz |
| B4 | Seite 1 | 2,3 g/m² | ++ | +++ | +++ | +++ | Innere Schicht ohne Zusatz |
| | Seite 2 | 2,3 g/m² | ++ | | | | Innere Schicht ohne Zusatz |
| B5 | Seite 1 | 0,9 g/m² | ++ | +++ | +++ | +++ | Sek. Primer + |
| | | | | | | | PVDC |
| | Seite 2 | 2,0 g/m² | ++ | | | | Innere Schicht ohne Zusatz |
| VB1 | Seite 1 | 0,8 g/m² | ++ | - | - | o | |
| | Seite 2 | 0,9 g/m² | ++ | | | | |
| VB2 | Seite 1 | 0,9 g/m² | ++ | - | o | o | |
| | Seite 2 | 1,8 g/m² | ++ | | | | |
| VB3 | Seite 1 | 0,85 g/m² | -- | + | ++ | ++ | äußere Schicht ohne Zusatz |
| | Seite 2 | 0,85 g/m² | -- | | | | äußere Schicht ohne Zusatz |

**Tabelle 3**

| Bewertungsschlüssel: % des übergegangenen Surrogatstoffs | |
|---|---|
| -- | > 2,5% |
| - | 1,5% bis < 2,5% |
| o | 1,0% bis < 1,5% |
| + | 0,5% bis < 1,0% |
| ++ | 0,1% bis < 0,5% |
| +++ | < 0,1% |

## Patentansprüche

1. Lebensmittelverpackung umfassend:
A) ein Lebensmittel,
B) eine beschichtete Folie, welche sich im Kontakt mit dem Lebensmittel befindet,
C) ein Karton auf Basis eines Recyclingkartons, welcher sich im Kontakt mit der beschichteten, biaxial orientierten Polypropylenfolie befindet,
**dadurch gekennzeichnet, dass** die beschichtete Folie B)
(a) eine biaxial orientierte Polypropylenfolie umfasst, welche auf mindestens einer Oberfläche
(b) mindestens eine erste Primerschicht P1 umfasst, welche sich in Kontakt mit einer Oberfläche der biaxial orientierten Polypropylenfolie befindet, und
eine erste innere Beschichtung B1(i) umfasst, welche sich in Kontakt mit der ersten Primerschicht befindet und die keine partikelförmigen Zusatzstoffe enthält und die mindestens ein Polymer basierend auf Acrylat enthält, und
(d) eine erste äußere Beschichtung B1(a) umfasst, welche sich in Kontakt mit der ersten inneren Beschichtung B1(i) befindet und welche die äußere Oberfläche der beschichteten Folie bildet und die reibungsvermindernde Zusatzstoffe enthält und die mindestens ein Polymer basierend auf Acrylat enthält.

2. Lebensmittelverpackung gemäß Anspruch 1, **dadurch gekennzeichnet, dass** die biaxial orientierte Polypropylenfolie (a) auf der zweiten gegenüberliegenden Oberfläche eine
(b) zweite Primerschicht P2 umfasst, welche sich in Kontakt mit der zweiten Oberfläche der biaxial orientierten Polypropylenfolie befindet, und
(c) eine zweite innere Beschichtung B2(i) umfasst, welche sich in Kontakt mit der zweiten Primerschicht P2 befindet und die keine partikelförmigen Zusatzstoffe enthält und die mindestens ein Polymer basierend auf Acrylat enthält, und
(d) eine zweite äußere Beschichtung B2(a) umfasst, welche sich in Kontakt mit der zweiten innere Beschichtung B2(i) befindet und welche die zweite äußere Oberfläche der beschichteten Folie bildet und die reibungsvermindernde Zusatzstoffe enthält und die mindestens ein Polymer basierend auf Acrylat enthält.

3. Lebensmittelverpackung gemäß Anspruch 1 oder 2, **dadurch gekennzeichnet, dass** das Auftragsgewicht der inneren Beschichtung/en B(i) jeweils in einem Bereich von 0,5 bis 1,5g/m² liegt und dass das Auftragsgewicht der äußeren Beschichtung/en B(a) jeweils in einem Bereich von 0,5 bis 1,5g/m² liegt.

4. Lebensmittelverpackung gemäß einem der Ansprüche 1 bis 3, **dadurch gekennzeichnet, dass** das Auftragsgewicht der Primerschicht und der inneren Beschichtung und der äußeren Beschichtung auf einer Seite der Folie in Summe in einem Bereich von 1,5 bis 4g/m² liegt.

5. Lebensmittelverpackung gemäß einem der Ansprüche 1 bis 4, **dadurch gekennzeichnet, dass** das die äußere Beschichtung/en partikelförmige Zusatzstoffe mit einer Partikelgröße von 0,05 bis 5 µm und in einer Menge von 0,01 bis 15 Gew.-% enthält.

6. Lebensmittelverpackung gemäß einem der Ansprüche 1 bis 5, **dadurch gekennzeichnet, dass** das die äußere Beschichtung/en Wachse in einer Menge von 2 bis 10 Gew.-% enthält.

7. Lebensmittelverpackung gemäß einem der Ansprüche 1 bis 6, **dadurch gekennzeichnet, dass** die Primerschicht/en aus Polyethylenimin aufgebaut ist.

8. Lebensmittelverpackung gemäß einem der Ansprüche 1 bis 7, **dadurch gekennzeichnet, dass** die äußere Beschichtung/en aus Polymethylmethacrylat, Polyethylacrylat, Polyethylmethylacrylat, Polybutylacrylat oder Polymethylacrylate oder aus Acrylatcopolymeren, basierend auf Methylmethacrylat, Ethylacrylat, Ethylmethylacrylat und/oder Methylacrylat, aufgebaut ist.

9. Lebensmittelverpackung gemäß einem der Ansprüche 1 bis 8, **dadurch gekennzeichnet, dass** der Recyclingkarton mindestens 300-1000 mg/kg Mineralöl enthält, vorzugsweise MOSH und MOAH Mineralöle, insbesondere der Typen MOSH 14-24, MOSH 24-35, MOAH 14-24 und MOAH 24-35.

10. Beschichtete Folie, welche
(a) eine biaxial orientierte Polypropylenfolie umfasst, welche auf mindestens einer Oberfläche
(b) mindestens eine erste Primerschicht P1 umfasst, welche sich in Kontakt mit einer Oberfläche der biaxial orientierten Polypropylenfolie befindet, und
(c) eine erste innere Beschichtung B1(i) umfasst, welche sich in Kontakt mit der ersten Primerschicht P1 befindet und die keine partikelförmigen Zusatzstoffe enthält und die mindestens ein Polymer basierend auf Acrylat enthält, und
(d) eine erste äußere Beschichtung B1(a) umfasst, welche sich in Kontakt mit der ersten innere Beschichtung B1(i) befindet und welche die äußere Oberfläche der beschichteten Folie bildet und die reibungsvermindernde Zusatzstoffe enthält und die mindestens ein Polymer basierend auf Acrylat enthält.

11. Beschichtete Folie, nach Anspruch 10, welche auf der zweiten gegenüberliegenden Oberfläche der biaxial orientierten Polypropylenfolie (a)
(b) eine zweite Primerschicht P2 umfasst, welche sich in Kontakt mit der zweiten Oberfläche der biaxial orientierten Polypropylenfolie (a) befindet, und
(c) eine zweite innere Beschichtung B2(i) umfasst, welche sich in Kontakt mit der zweiten Primerschicht P2 befindet und die keine partikelförmigen Zusatzstoffe enthält und die mindestens ein Polymer basierend auf Acrylat enthält, und
(d) eine zweite äußere Beschichtung B2(a) umfasst, welche sich in Kontakt mit der zweiten innere Beschichtung B2(i) befindet und welche die zweite äußere Oberfläche der beschichteten Folie bildet und die reibungsvermindernde Zusatzstoffe enthält und die mindestens ein Polymer basierend auf Acrylat enthält.

12. Beschichtete Folie, nach Anspruch 10, welche auf der zweiten gegenüberliegenden Oberfläche der biaxial orientierten Polypropylenfolie (a)
(b) eine zweite Primerschicht P2 umfasst, welche sich in Kontakt mit der zweiten Oberfläche der biaxial orientierten Polypropylenfolie (a) befindet, und
(c) eine zweite äußere Beschichtung B2(a) umfasst, welche sich in Kontakt mit der zweiten Primerschicht P2 befindet und welche die zweite äußere Oberfläche der beschichteten Folie bildet und die reibungsvermindernde Zusatzstoffe enthält und die mindestens ein Polymer basierend auf Acrylat enthält.

13. Kaschierter Karton, **dadurch gekennzeichnet, dass** der Karton ein Karton auf Basis eines Recyclingkartons ist und mit einer Folie nach einem der Ansprüche 10 bis 12 kaschiert ist.

## Claims

1. Food packaging comprising:
A) a foodstuff,
B) a coated film in contact with the foodstuff,
C) a cardboard box based on recycled cardboard in contact with the coated, biaxially oriented polypropylene film,
**characterized in that** the coated film B) comprises:
(a) a biaxially oriented polypropylene film comprising, on at least one surface,
(b) at least one first primer layer P1 in contact with a surface of the biaxially oriented polypropylene film, and
(c) a first inner coating B1(i) in contact with the first primer layer, which contains no particulate additives and contains at least one acrylate-based polymer, and
(d) a first outer coating B1(a) in contact with the first inner coating B1(i), which forms the outer surface of the coated film and contains friction-reducing additives and contains at least one acrylate-based polymer.

2. Food packaging according to claim 1, **characterized in that** the biaxially oriented polypropylene film (a) comprises on the second opposing surface a
(b) second primer layer P2, which is in contact with the second surface of the biaxially oriented polypropylene film, and
(c) a second inner coating B2(i), which is in contact with the second primer layer P2 and which does not contain any particulate additives and contains at least one acrylate-based polymer, and
(d) a second outer coating B2(a), which is in contact with the second inner coating B2(i) and which forms the second outer surface of the coated film and which contains friction-reducing additives and contains at least one acrylate-based polymer.

3. Food packaging according to claim 1 or 2, **characterized in that** the application weight of the inner coating(s) B(i) is in the range of 0.5 to 1.5 g/m² and that the application weight of the outer coating(s) B(a) is in the range of 0.5 to 1.5 g/m².

4. Food packaging according to any one of claims 1 to 3, **characterized in that** the total application weight of the primer layer, the inner coating, and the outer coating on one side of the film is in the range of 1.5 to 4 g/m².

5. Food packaging according to any one of claims 1 to 4, **characterized in that** the outer coating(s) contains particulate additives with a particle size of 0.05 to 5 µm in an amount of 0.01 to 15% by weight.

6. Food packaging according to any one of claims 1 to 5, **characterized in that** the outer coating(s) contains waxes in an amount of 2 to 10% by weight.

7. Food packaging according to any one of claims 1 to 6, **characterized in that** the primer layer(s) is composed of polyethyleneimine.

8. Food packaging according to one of claims 1 to 7, **characterized in that** the outer coating(s) are composed of polymethyl methacrylate, polyethylene acrylate, polyethylene methyl acrylate, polybutyl acrylate, or polymethyl acrylates, or of acrylate copolymers based on methyl methacrylate, ethyl acrylate, ethyl methyl acrylate, and/or methyl acrylate.

9. Food packaging according to one of claims 1 to 8, **characterized in that** the recycled cardboard contains at least 300-1000 mg/kg of mineral oils, preferably MOSH and MOAH, in particular of types MOSH 14-24, MOSH 24-35, MOAH 14-24, and MOAH 24-35.

10. Coated film comprising
(a) a biaxially oriented polypropylene film, which on at least one surface comprises
(b) at least one first primer layer P1, which is in contact with a surface of the biaxially oriented polypropylene film, and
(c) a first inner coating B1(i), which is in contact with the first primer layer P1 and which does not contain any particulate additives and contains at least one acrylate-based polymer, and
(d) a first outer coating B1(a), which is in contact with the first inner coating B1(i) and which forms the outer surface of the coated film, and which contains friction-reducing additives and contains at least one acrylate-based polymer.

11. Coated film according to claim 10, comprising on the second opposing surface of the biaxially oriented polypropylene film (a)
(b) a second primer layer P2, which is in contact with the second surface of the biaxially oriented polypropylene film (a), and
(c) a second inner coating B2(i), which is in contact with the second primer layer P2 and which does not contain any particulate additives and which contains at least one polymer based on acrylate, and
(d) a second outer coating B2(a), which is in contact with the second inner coating B2(i) and which forms the second outer surface of the coated film and which contains friction-reducing additives and which contains at least one polymer based on acrylate.

12. Coated film according to claim 10, comprising on the second opposing surface of the biaxially oriented polypropylene film (a)
(b) a second primer layer P2, which is in contact with the second surface of the biaxially oriented polypropylene film (a), and
(c) a second outer coating B2(a), which is in contact with the second primer layer P2 and which forms the second outer surface of the coated film and which contains friction-reducing additives and contains at least one polymer based on acrylate.

13. Laminated cardboard, **characterized in that** the cardboard is based on recycled cardboard and is laminated with a film according to any one of claims 10 to 12.

## Revendications

1. Emballage alimentaire comprenant :
A) un aliment,
B) un film revêtu, qui est en contact avec l'aliment,
C) un carton à base d'un carton recyclé, qui est en contact avec le film de polypropylène revêtu orienté biaxialement,
**caractérisé en ce que** le film revêtu B)
(a) comprend un film de polypropylène orienté biaxialement, qui, sur au moins une surface,
(b) comprend au moins une première couche d'apprêt P1, qui est en contact avec une surface du film de polypropylène orienté biaxialement, et
(c) comprend un premier revêtement intérieur B1(i), qui est en contact avec la première couche d'apprêt et qui ne contient pas d'additifs particulaires et qui contient au moins un polymère à base d'acrylate, et
(d) comprend un premier revêtement extérieur B1(a), qui est en contact avec le premier revêtement intérieur B1(i) et qui forme la surface extérieure du film revêtu et qui contient des additifs réduisant la friction et qui contient au moins un polymère à base d'acrylate.

2. Emballage alimentaire selon la revendication 1, **caractérisé en ce que** le film de polypropylène (a) orienté biaxialement, sur la deuxième surface opposée,
(b) comprend une deuxième couche d'apprêt P2, qui est en contact avec la deuxième surface du film de polypropylène orienté biaxialement, et
(c) comprend un deuxième revêtement interne B2(i), qui est en contact avec la deuxième couche d'apprêt P2 et qui ne contient pas d'additifs particulaires et qui contient au moins un polymère à base d'acrylate, et
(d) comprend un deuxième revêtement extérieur B2(a), qui est en contact avec le deuxième revêtement intérieur B2(i) et qui forme la deuxième surface extérieure du film revêtu et qui contient des additifs réduisant la friction et qui contient au moins un polymère à base d'acrylate.

3. Emballage alimentaire selon la revendication 1 ou 2, **caractérisé en ce que** le poids d'application du/des revêtement(s) intérieur(s) B(i) se situe respectivement dans une plage de 0,5 à 1,5 g/m² et que le poids d'application du/des revêtement(s) extérieur(s) B(a) se situe respectivement dans une plage de 0,5 à 1,5 g/m².

4. Emballage alimentaire selon l'une des revendications 1 à 3, **caractérisé en ce que** le poids d'application de la couche d'apprêt et du revêtement intérieur et du revêtement extérieur d'un côté du film se situe au total dans une plage de 1,5 à 4 g/m².

5. Emballage alimentaire selon l'une des revendications 1 à 4, **caractérisé en ce que** le ou les revêtements extérieurs contiennent des additifs particulaires d'une taille de particule de 0,05 à 5 µm et en une quantité de 0,01 à 15 % en poids.

6. Emballage alimentaire selon l'une des revendications 1 à 5, **caractérisé en ce que** le ou les revêtements extérieurs contiennent des cires en une quantité de 2 à 10 % en poids.

7. Emballage alimentaire selon l'une des revendications 1 à 6, **caractérisé en ce que** la ou les couches d'apprêt sont réalisées en polyéthylèneimine.

8. Emballage alimentaire selon l'une des revendications 1 à 7, **caractérisé en ce que** le ou les revêtements extérieurs sont réalisés en polyméthacrylate de méthyle, polyacrylate d'éthyle, polyméthacrylate d'éthyle, polyacrylate de butyle ou polyacrylate de méthyle ou de copolymères d'acrylate à base de méthacrylate de méthyle, acrylate d'éthyle, méthacrylate d'éthyle et/ou acrylate de méthyle.

9. Emballage alimentaire selon l'une des revendications 1 à 8, **caractérisé en ce que** le carton recyclé contient au moins 300-1000 mg/kg d'huile minérale, de préférence des huiles minérales MOSH et MOAH, en particulier des types MOSH 14-24, MOSH 24-35, MOAH 14-24 et MOAH 24-35.

10. Film revêtu, qui
(a) comprend un film de polypropylène orienté biaxialement, qui, sur au moins une surface,
(b) comprend au moins une première couche d'apprêt P1, qui est en contact avec une surface du film de polypropylène orienté biaxialement, et
(c) comprend un premier revêtement intérieur B1(i), qui est en contact avec la première couche d'apprêt P1 et qui ne contient pas d'additifs particulaires et qui contient au moins un polymère à base d'acrylate, et
(d) comprend un premier revêtement extérieur B1(a), qui est en contact avec le premier revêtement intérieur B1(i) et qui forme la surface extérieure du film revêtu et qui contient des additifs réduisant la friction et qui contient au moins un polymère à base d'acrylate.

11. Film revêtu, selon la revendication 10, qui, sur la deuxième surface opposée du film de polypropylène orienté biaxialement (a),
(b) comprend une deuxième couche d'apprêt P2, qui est en contact avec la deuxième surface du film de polypropylène (a) orienté biaxialement, et
(c) comprend un deuxième revêtement intérieur B2(i), qui est en contact avec la deuxième couche d'apprêt P2 et qui ne contient pas d'additifs particulaires et qui contient au moins un polymère à base d'acrylate, et
(d) comprend un deuxième revêtement extérieur B2(a), qui est en contact avec le deuxième revêtement intérieur B2(i) et qui forme la deuxième surface extérieure du film revêtu et qui contient des additifs réduisant la friction et qui contient au moins un polymère à base d'acrylate.

12. Film revêtu, selon la revendication 10, qui, sur la deuxième surface opposée du film de polypropylène orienté biaxialement (a),
(b) comprend une deuxième couche d'apprêt P2, qui est en contact avec la deuxième surface du film de polypropylène (a) orienté biaxialement, et
(c) comprend un deuxième revêtement extérieur B2(a), qui est en contact avec la deuxième couche d'apprêt P2 et qui forme la deuxième surface extérieure du film revêtu et contient les additifs réduisant la friction et qui contient au moins un polymère à base d'acrylate.

13. Carton contrecollé, **caractérisé en ce que** le carton est un carton à base d'un carton recyclé et est contrecollé d'un film selon l'une des revendications 10 à 12.
